(19) Europäisches Patentamt
European Patent Office
Office européen des brevets

(11) **EP 3 308 088 B1**

(12) **EUROPÄISCHE PATENTSCHRIFT**

(45) Veröffentlichungstag und Bekanntmachung des Hinweises auf die Patenterteilung:
**14.08.2019  Patentblatt 2019/33**

(21) Anmeldenummer: **16731074.7**

(22) Anmeldetag: **13.06.2016**

(51) Int Cl.:
*F28D 7/02* (2006.01)     *F28D 21/00* (2006.01)
*F28F 1/36* (2006.01)

(86) Internationale Anmeldenummer:
**PCT/EP2016/063507**

(87) Internationale Veröffentlichungsnummer:
**WO 2016/198693 (15.12.2016 Gazette 2016/50)**

(54) **WÄRMETAUSCHERBAUTEIL, WÄRMETAUSCHERSYSTEM MIT EINER MEHRZAHL VON SOLCHEN WÄRMETAUSCHERBAUTEILEN UND VORRICHTUNG ZUR ERZEUGUNG EINES BRENNBAREN PRODUKTGASES AUS KOHLENSTOFFHALTIGEN EINSATZSTOFFEN MIT EINEM SOLCHEN WÄRMETAUSCHERSYSTEM**

HEAT EXCHANGER COMPONENT, HEAT EXCHANGER SYSTEM COMPRISING A PLURALITY OF HEAT EXCHANGER COMPONENTS OF THIS TYPE, AND DEVICE FOR PRODUCING A COMBUSTIBLE PRODUCT GAS FROM CARBON-CONTAINING INPUT MATERIALS WITH A HEAT EXCHANGER SYSTEM OF THIS TYPE

COMPOSANT ÉCHANGEUR DE CHALEUR, SYSTÈME ÉCHANGEUR DE CHALEUR COMPORTANT UNE PLURALITÉ DE TELS COMPOSANTS ÉCHANGEURS DE CHALEUR ET DISPOSITIF DE PRODUCTION D'UN PRODUIT GAZEUX COMBUSTIBLE À PARTIR DE MATIÈRES PREMIÈRES CARBONÉES À L'AIDE D'UN TEL SYSTÈME ÉCHANGEUR DE CHALEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.06.2015  DE 102015210826**

(43) Veröffentlichungstag der Anmeldung:
**18.04.2018  Patentblatt 2018/16**

(73) Patentinhaber: **Rosmarin Holdings Limited Ramsey, Isle of Man IM8 2LQ (GB)**

(72) Erfinder:
• **HOFMEISTER, Michael**
**94269 Rinchnach (DE)**

• **DRESSLER, Horst**
**92360 Mühlhausen (DE)**

(74) Vertreter: **Ernicke, Moritz**
**ERNICKE Patent- und Rechtsanwälte**
**Beim Glaspalast 1**
**86153 Augsburg (DE)**

(56) Entgegenhaltungen:
| | |
|---|---|
| EP-A2- 1 884 634 | AT-B- 371 591 |
| JP-A- H1 162 723 | JP-A- 2000 111 277 |
| US-A1- 2008 190 593 | US-B1- 6 827 138 |

## Beschreibung

Die Erfindung betrifft ein Wärmetauscherbauteil und ein Wärmetauschersystem mit einer Mehrzahl von solchen Wärmetauscherbauteilen zum Temperieren eines Gasstroms mit Feststoffpartikeln sowie eine Vorrichtung zur Erzeugung eines brennbaren Produktgases aus kohlenstoffhaltigen Einsatzstoffen mit einem solchen Wärmetauschersystem. Gasströme, die mit Feststoffpartikeln versetzt sind, treten in Form von Rauchgas aus Verbrennungsanlagen, als Produktgasstrom in chemischen Reaktoren und insbesondere auch als brennbares Produktgas bei der Umsetzung von kohlenstoffhaltigen Feststoffen (Holzvergasung. Kohlevergasung etc.) auf. In der Regel müssen die heißen Gasströme mit Feststoffpartikeln gekühlt werden. Erfolgt diese Kühlung in herkömmlichen Flüssig-Gasförmig-Wärmetauschern, besteht die Gefahr, dass sich die Feststoffpartikel teilweise in Wärmetauscher ablagern und dadurch die Effektivität der Wärmeübertragung erheblich verschlechtern. Auch verringern sich die Betriebszeiten, da die Wärmetauscher von Zeit zu Zeit gereinigt werden müssen.

JP H11 62723 A und EP 1884634 A2 beschreiben Wärmetauscher für einen Auspuff. Der Wärmetauscher für Abgas in JP 2000 111277 A, weist in Längsrichtung verlaufende Kühlrippen auf. AT 371591 B zeigt einen Wärmetauscher, insbesondere für Spritzgussoder Druckgussmaschinen, mit einem schneckenförmigen, heiz- oder kühlbaren Wärmeübertragungskörper, in dessen hohlen Kern wahlweise Heizstäbe bzw. ein Kühlmittelzuführrohr hineinragen.

Aus US 2008/0190593 A1, die ein Wärmetauscherbauteil gemäß dem Oberbegriff des Anspruchs 1 offenbart, ist ein Wärmetauscher mit helixförmigen Leitblechen bekannt, welche aus inneren und äußeren Teilen bestehen und von Rohren für den Wärmeaustausch durchsetzt sind, die von einem Wärmeaustauschmedium durchströmt werden. US 6827138 B1 offenbart einen Wärmetauscher mit viertelkreisförmigen Leitblechen, die in Form einer Helix angeordnet sind.

Ein Problem bei bekannten Wärmetauschern ist, dass durch die Kühlung des Gasstroms im Wärmetauscherbauteil sich das Volumen des Gasstroms verringert und damit bei gleichbleibendem Strömungsvolumen sich auch die Strömungsgeschwindigkeit verringert. Damit verringern sich auch die Fliehkräfte in der schraubenförmigen Gasströmung und die Dicke der Prandtl'schen Grenzschicht steigt und der Wärmeübergangskoeffizient sinkt.

Es ist daher Aufgabe der vorliegenden Erfindung, ein Wärmetauscherbauteil und ein Wärmetauschersystem mit solchen Wärmetauscherbauteilen anzugeben, die beim Temperieren und insbesondere beim Kühlen von Gasströmen mit Feststoffpartikeln weniger leicht verschmutzen und eine hohe Wärmeübertragungskapazität besitzen. Weiter ist es Aufgabe der vorliegenden Erfindung, eine Vorrichtung zur Erzeugung eines brennbaren Produktgases aus kohlenstoffhaltigen Einsatzstoffen mit einem solchen Wärmetauschersystem anzugeben.

Die Lösung dieser Aufgaben erfolgt durch die Ansprüche 1, 10 und 12.

Der Gaseinlass des Wärmetauscherbauteils weist über seine Länge eine konstante erste Querschnittsfläche und der Gasauslass über seine Länge eine konstante zweite Querschnittsfläche auf, wobei die erste Querschnittsfläche größer als die zweite Querschnittsfläche ist. Dadurch wird dem Umstand Rechnung getragen, dass durch die Kühlung des Gasstroms im Wärmetauscherbauteil sich das Volumen des Gasstroms verringert und damit bei gleichbleibendem Strömungsvolumen sich auch die Strömungsgeschwindigkeit verringert. Durch die kleinere Querschnittsfläche des Gasauslasses im Vergleich zum Gaseinlass wird erreicht, dass die Strömungsgeschwindigkeit am Gaseinlass in etwa gleich der Strömungsgeschwindigkeit im Gasauslass ist.

Durch den quer und tangential in den Strömungskanal mündenden Gaseinlass und Gasauslass ergibt sich in dem Strömungskanal eine schraubengangförmige Strömung um die Mitte des Hauptkörpers. Die Strömungsgeschwindigkeit des Gasstroms mit Feststoffpartikeln ist dabei in der Nähe des Gaseinlasses sehr hoch, so dass die Prandtl'sche Grenzschicht an der Innenseite des Mantels des Hauptkörpers vergleichsweise dünn ist. Durch die hohen Fliehkräfte aufgrund der hohen Strömungsgeschwindigkeit wird die Prandtl'sche Grenzschicht quasi zusammengedrückt. Damit erhöht sich der Wärmeübergang zwischen dem Gasstrom und dem Mantel erheblich, d. h. die Außenseite des Mantels gibt mehr Wärme an die Umgebung ab. Aufgrund der hohen Fliehkräfte konzentrieren sich auch die Feststoffpartikel in einem engen Bereich an der Innenseite des Mantels, so dass die Wahrscheinlichkeit von Partikelkollisionen und des Zusammenbackens von kleineren Partikeln zu größeren Partikeln stark ansteigt. Größere Feststoffpartikel lassen sich in nachgeschalteten Filtern leichter abtrennen. Schließlich wird durch die hohe Strömungsgeschwindigkeit und die damit verbundene turbulente Strömung auch verhindert, dass sich Feststoffpartikel an der Innenseite des Mantels ablagern, wie dies bei laminarer Strömung zu befürchten wäre.

Durch die Ausgestaltungen gemäß den Ansprüchen 2 bis 7 wird die Ausbildung und Aufrechterhaltung der gewünschten schraubenförmigen Gasströmung in dem ringspaltförmigen Strömungskanal gefördert.

Durch das schraubengangförmige Leitblech nach Anspruch 3 oder 4 wird die schraubengangförmige Gasströmung unterstützt und aufrechterhalten. Das schraubengangförmige Leitblech kann eine oder mehr Windungen aufweisen. Es können auch mehrere schraubengangförmige Leitbleche vorgesehen werden. Schraubengangförmige Leitbleche mit einer oder wenigen Windungen sind vorteilhaft, da sich mit der Windungszahl der Druckverlust im Wärmetauscher erhöht, was unerwünscht ist. Aus diesem Grund ist es auch vorteilhaft nur ein schraubengangförmiges Leitblech pro Wärmetauscherbauteil vorzusehen.

Durch den quer und tangential in den Strömungskanal mündenden Gaseinlass und Gasauslass ergibt sich in dem Strömungskanal eine schraubenförmige Strömung um die Mitte des Hauptkörpers.

Durch den ringspaltförmigen Strömungskanal nach Anspruch 5 oder 6 wird die schraubengangförmige Strömung des Gasstroms im Strömungskanal unterstützt.

Durch die Ausgestaltung nach Anspruch 8 wird anstelle eines Gas-Gas- ein Gas-Flüssigkeit-Wärmetauscher bereitgestellt, der eine höhere Wärmeübertragungsleistung aufweist.

Durch die Volumenverminderung aufgrund des Wärmeentzugs sinkt die Strömungsgeschwindigkeit zwischen Gaseinlass und Gasauslass ab. Damit verringern sich auch die Fliehkräfte in der schraubenförmigen Gasströmung und die Dicke der Prandtl'schen Grenzschicht steigt und der Wärmeübergangskoeffizient sinkt. Um diesen unerwünschten Effekt auszugleichen, werden gemäß Anspruch 10 mehrere Wärmetauscherbauteile in Serie zu einem Wärmetauschersystem verbunden. Hierbei wird der Gasauslass des i-ten Wärmetauscherbauteils zum Gaseinlass des (i+1)-ten Wärmetauscherbauteils. Dadurch, dass die Querschnittsfläche des Gasauslasses des i-ten Wärmetauscherbauteils bzw. des Gaseinlasses des (i+1)-ten Wärmetauscherbauteils kleiner als die Querschnittsfläche des Gaseinlasses des i-ten Wärmetauscherbauteils ist, wird der Gasstrom wieder auf die ursprüngliche Strömungsgeschwindigkeit beschleunigt, so dass im Bereich des Gaseinlasses des (i+1)-ten Wärmetauscherbauteils wieder hohe Fliehkräfte wirken und die Prandtl'sche Grenzschicht eng an die Innenseite des Mantels des Hauptkörpers des (i+1)-ten Wärmetauscherbauteils gedrückt wird.

Durch die vorteilhafte Ausgestaltung nach Anspruch 11 wird das sich durch die Kühlung verringernde Volumen des Gasstroms berücksichtigt bzw. das Volumen des ringspaltförmigen Strömungskanals wird in jeder Stufe des Wärmetauschersystems an das sich verringernde Volumen des zu kühlenden Gasstroms angepasst.

Durch den Einsatz des Wärmetauschersystems in einer Vorrichtung zur Erzeugung eines brennbaren Produktgases aus kohlenstoffhaltigen Einsatzstoffen wird diese effektiver und bei gleicher Leistung verringert sich aufgrund der Kompaktheit des Wärmetauschersystems das Bauvolumen.

Anspruch 12 betrifft eine kompakte Vorrichtung zur Erzeugung eines brennbaren Produktgases aus kohlenstoffhaltigen Einsatzstoffen mit einem Wärmetauschersystem nach Anspruch 10 oder 11.

Die übrigen Unteransprüche beziehen sich auf weitere vorteilhafte Ausgestaltungen der Erfindung.

Weitere Einzelheiten Merkmale und Vorteile der Erfindung ergeben sich aus der nachfolgenden Beschreibung von Ausführungsbeispielen anhand der Zeichnung.

Es zeigt

Fig. 1 eine schematische Schnittdarstellung einer ersten Ausführungsform eines Wärmetauscherbauteils gemäß der vorliegenden Erfindung;

Fig. 2 eine schematische Schnittdarstellung entlang der Linie A - A in Fig. 1;

Fig. 3 eine zweite bevorzugte Ausführungsform eines Wärmetauscherbauteils gemäß der vorliegenden Erfindung;

Fig. 4 eine schematische Schnittdarstellung einer beispielhaften Ausgestaltung eines Wärmetauschersystems mit drei Wärmetauscherbauteilen nach Fig. 1;

Fig. 5 eine schematische Schnittdarstellung einer Vorrichtung zur Erzeugung eines brennbaren Produktgases aus kohlenstoffhaltigen Einsatzstoffen mit einem Wärmetauschersystem nach Fig. 4; und

Fig. 6a eine Seitenansicht, Fig. 6b eine Ansicht in Strömungsrichtung und Fig. 6c eine perspektivische Darstellung eines schraubengangförmigen Leitblechs.

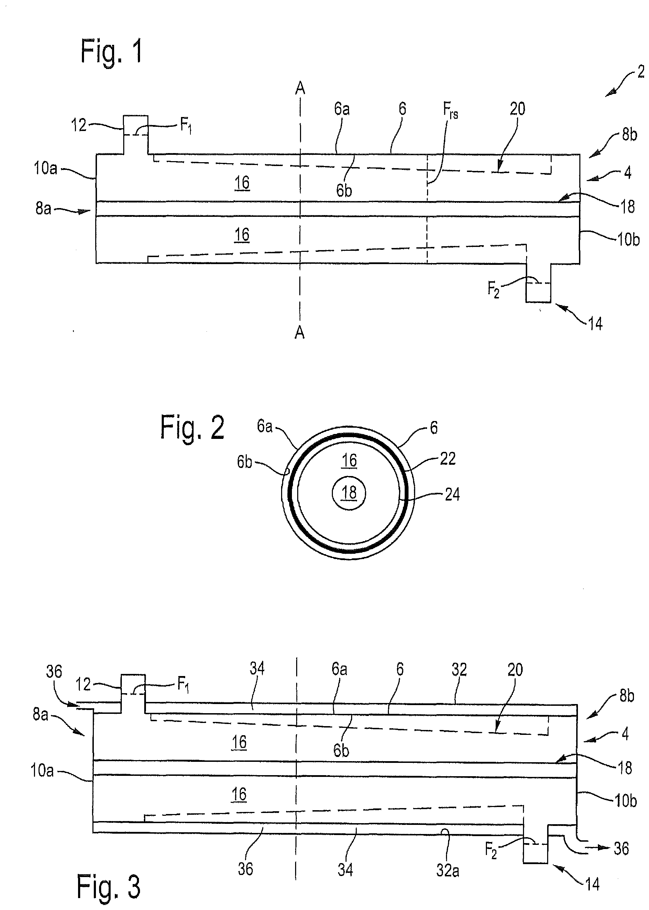

Fig. 1 zeigt eine erste Ausführungsform eines Wärmetauscherbauteils 2 zur Kühlung eines heißen Gasstroms 1 mit Feststoffpartikeln 3 gemäß der vorliegenden Erfindung. Das Wärmetauscherbauteil 2 ist ein Gas-Luft-Wärmetauscher, d. h. die Wärme aus dem Gasstrom wird an die Umgebungsluft abgegeben. Das Wärmetauscherbauteil 2 umfasst einen kreiszylindrischen Hauptkörper 4, der von einem Mantel 6 umgeben ist. Die linke und rechte Stirnseite 8a, 8b des Hauptkörpers 4 sind mit Flanschen 10a und 10b verschlossen. Der Mantel 6 besteht aus einem gut Wärme leitendem Material und umfasst eine Außenseite 6a und eine Innenseite 6b. Im Bereich der linken Stirnseite 8a mündet ein Gaseinlass 12 senkrecht zur Längsrichtung des Hauptkörpers 4 und tangential zum Außenumfang des Hauptkörpers 4 in den Hauptkörper 4. Aus dem Bereich der rechten Stirnseite 8b des Hauptkörpers 4 führt ein Gasauslass 14 senkrecht zu der Längsrichtung des Hauptkörpers 4 aus dem Hauptkörper heraus. Der Gaseinlass 12 weist über seine Länge eine konstante erste Querschnittsfläche $F_1$ und der Gasauslass 14 eine über seine Länge konstante zweite Querschnittsfläche $F_2$ auf. Die Querschnittsfläche $F_1$ ist dabei größer als die Querschnittsfläche $F_2$. In dem kreiszylindrischen Hauptkörper 4 ist zur Ausbildung eines kreisringspaltförmigen Strömungskanals 16 ein stangenförmiges Bauteil 18 mit kreisförmigen Querschnitt mittig angeordnet. Das Bauteil 18 ist an den beiden Flanschen 10a und 10b befestigt.

Durch den kreisringspaltförmigen Strömungskanal 16 und den senkrecht und tangential in den kreisringspaltförmigen Strömungskanal 16 mündenden Gaseinlass 12 ergibt sich in dem kreisringspaltförmigen Strömungskanal 16 eine schraubenförmige Gasströmung um das stangenförmige Bauteil 18. Die Querschnittsfläche $F_{rs}$ des kreisringspaltförmigen Strömungskanals 16 ist zwischen Gaseinlass 12 und Gasauslass 14 konstant. Die Strömungsgeschwindigkeit v des Gasstroms 1 mit Feststoffpartikeln 3 ist dabei in der Nähe des Gaseinlasses 12 sehr hoch, so dass die Prandtl'sche Grenzschicht 20 an der Innenseite 6b des Mantels 6 des Hauptkörpers 4 vergleichsweise dünn ist. Durch die hohen Fliehkräfte aufgrund der hohen Strömungsgeschwindigkeit v wird die Prandtl'sche Grenzschicht 20 quasi zusammengedrückt. Damit erhöht sich der Wärmeübergang zwischen dem Gasstrom 1 und dem Mantel 6 erheblich, d. h. die Außenseite 6a des Mantels 6 gibt mehr Wärme an die Umgebung ab.

Aufgrund der hohen Fliehkräfte durch die erzwungene schraubenförmige Gasströmung 1 konzentrieren sich auch die Feststoffpartikel 6 in einem engen Bereich an der Innenseite des Mantels 6 und zwar schwere Feststoffpartikel 22 näher an der Innenseite 6b des Mantels 6 und leichtere Feststoffpartikel 24 in etwas größerem Abstand zu der Innenseite 6b. Hierdurch erhöht sich die Wahrscheinlichkeit von Partikelkollisionen und des Zusammenbackens von kleineren Partikeln zu größeren Partikeln stark. Größere Feststoffpartikel 3 lassen sich in nachgeschalteten Filtern leichter abtrennen. Diese Zone verstärkter Partikelkollision ist in Fig. 2, die einen Schnitt entlang der Linie A - A in Fig. 1 darstellt, schematisch dargestellt.

Schließlich wird durch die hohe Strömungsgeschwindigkeit v im Gasstrom 1 auch verhindert, dass sich Feststoffpartikel 3 an der Innenseite 6b des Mantels 6 ablagern, wie dies bei laminaren Strömungsverhältnissen zu befürchten wäre.

Da dem Gasstrom 1 über den Mantel 6 kontinuierlich Wärme entzogen wird, verringert sich das Volumen des Gasstroms 1, d. h. der Volumenstrom sinkt bei konstant bleibendem Massenstrom kontinuierlich ab. Dadurch verringert sich die Strömungsgeschwindigkeit v und folglich werden auch die Fliehkräfte im Gasstrom 1 kleiner, die Dicke der Prandtl'sche Grenzschicht 20 erhöht sich und der Wärmeübergangskoeffizient zum Mantel 6 verringert sich zwischen dem Gaseinlass 12 und dem Gasauslass 14. Diese Zunahme der Dicke der Prandtl'schen Grenzschicht 20 ist in Fig. 1 entlang der Innenseite 6b des Mantels 6 als gestrichelte Linie dargestellt. Diese Geschwindigkeitsabnahme zwischen Gaseinlass 12 und Gasauslass 14 wird durch die gegenüber dem Gaseinlass 12 verkleinerte Querschnittsfläche $F_2$ des Gasauslasses 14 wieder ausgeglichen, so dass die Strömungsgeschwindigkeit $v_2$ am Gasauslass 14 im Wesentlichen der Strömungsgeschwindigkeit $v_1$ am Gaseinlass 12 entspricht.

Fig. 3 zeigt eine zweite Ausführungsform eines Wärmetauscherbauteils 30, das im Gegensatz zur ersten Ausführungsform des Wärmetauscherbauteils 2 als Gas-Flüssigkeits-Wärmetauscher ausgebildet ist. Das Wärmetauscherbauteil 30 unterscheidet sich von dem Wärmetauscherbauteil 2 nach Fig. 1 dadurch, dass der kreiszylindrische Hauptkörper 4 mittig in einen kreiszylindrischen Behälter 32 eingebettet ist. Hierdurch ergibt sich zwischen der Außenseite 6b des Mantels 6 und der Innenseite 32a ein kreisringförmiger Strömungskanal 34 für ein flüssiges Wärmetauschermedium 36, z. B. Wasser. Das Wärmetauschermedium 36 fließt in dem ringspaltförmigen Strömungskanal 34 turbulent. Die Wärmetauscherleistung des Wärmetauscherbauteils 30 erhöht sich dadurch gegenüber der Wärmetauscherleistung des Wärmetauscherbauteils 2 erheblich.

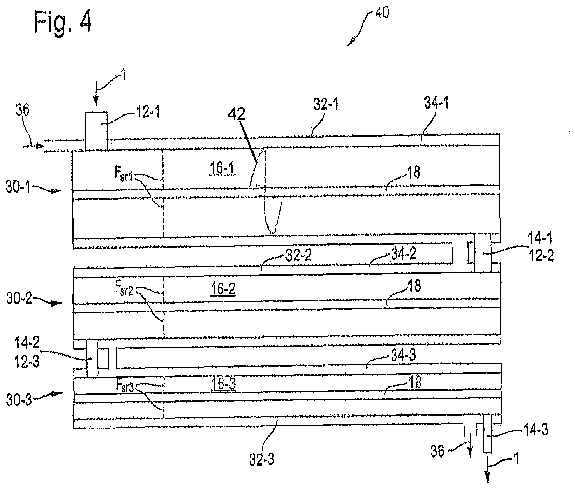

Fig. 4 zeigt eine beispielhafte Ausgestaltung eines Wärmetauschersystems 40 mit einem ersten, einem zweiten und einem dritten Wärmetauscherbauteilen 30-1, 30-2 und 30-3 nach Fig. 3. Die drei Wärmetauscherbauteile 30-i sind in Reihe hintereinandergeschaltet, so dass der Gasauslass 14-1 des ersten Wärmetauscherbauteils 30-1 zum Gaseinlass 12-2 des zweiten Wärmetauscherbauteils 30-2 und der Gasauslass 14-2 des zweiten Wärmetauscherbauteils 30-2 zum Gaseinlass 12-3 des dritten Wärmetauscherbauteils 30-3 wird.

Für die Querschnittsflächen $F_{rs(1)}$, $F_{rs(2)}$ und $F_{rs(3)}$ der kreisringspaltförmigen Strömungskanäle 16-1, 16-2 und 16-3 der drei Wärmetauscherbauteile 30-1, 30-2 und 30-3 gilt: $F_{rs(1)} > F_{rs(2)} > F_{rs(3)}$. Durch die Verringerung der Querschnittsflächen $F_{rs(1)}$, $F_{rs(2)}$ und $F_{rs(3)}$ von einem Wärmetauscherbauteil 30-i zum nächsten 30-(i+1) wird die Verkleinerung des Gasvolumens aufgrund der Kühlung des Gasstroms 1 ausgeglichen.

Durch die Verkleinerung der Querschnittsflächen $F_{2-i}$ der Gasauslässe der einzelnen Wärmetauscherbauteil 30-i gegenüber den Querschnittsflächen $F_{1-i}$ der Gaseinlässe der einzelnen Wärmetauscherbauteil 30-i wird die Strömungsgeschwindigkeit v an den jeweiligen Gaseinlässen 12-i konstant gehalten, so dass auch in jedem Wärmetauscherbauteil 30-i in etwa die gleichen Fliehkraftverhältnisse vorliegen.

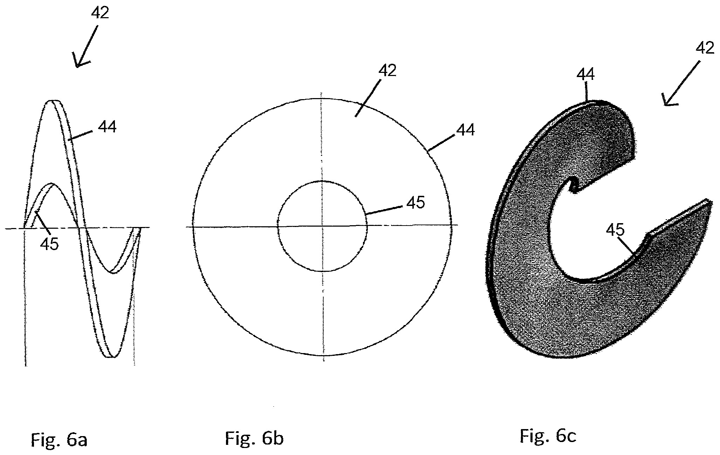

In Fig. 4 ist in dem kreisringspaltförmigen Strömungskanal 16-1 ein schraubengangförmiges Leitblech 42 angeordnet, das im Detail in den Figuren 6a, 6b und 6c gezeigt ist. Durch das Leitblech 42 wird die schraubengangförmige Gasströmung in dem Strömungskanal 16-1 unterstützt und aufrechterhalten. Das schraubengangförmige Leitblech 42 weist eine Außenkante 44 und eine Innenkante 45 auf. Die Außenkante 44 schließt dicht mit der Innenseite 6b des Mantels 6 des Hauptkörpers 4 ab und die Innenkante 45 schließt dicht mit der Außenseite des stangenförmigen Bauteils 18 ab.

Ein solches schraubengangförmiges Leitblech 42 kann auch in den Strömungskanälen 16-2 und 16-3 des Wärmetauschersystems 40 und in den Strömungskanälen 16 der Wärmtauscherbauteile nach den Ausführungsformen nach Fig. 1 bis 3 vorgesehen sein.

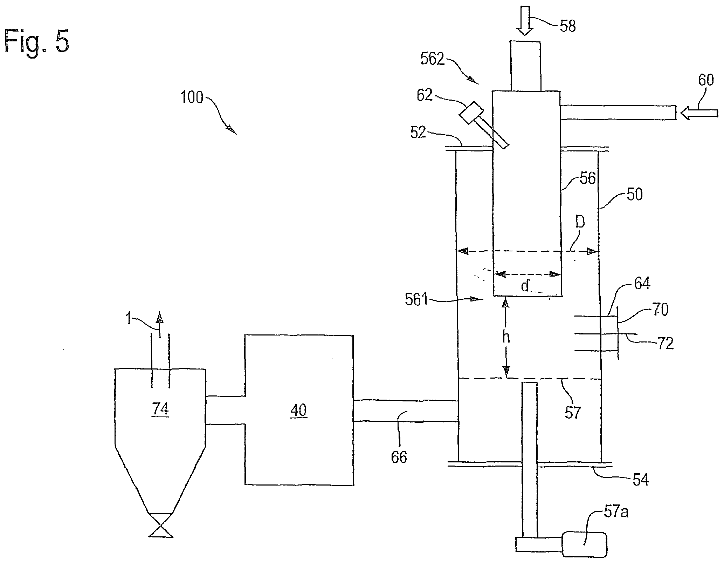

Fig. 5 zeigt eine schematische Darstellung einer beispielhaften Ausgestaltung einer Vorrichtung 100 zur Erzeugung eines brennbaren Produktgases 1 aus kohlenstoffhaltigen Einsatzstoffen mit einem Wärmetauschersystem 40 gemäß Fig. 4. Die Vorrichtung 100 umfasst einen rohrförmigen Vergaserbehälter 50 dessen Enden mit einem oberen Deckel 52 und einen unteren Deckel 54 verschlossen sind. Ein rohrförmiges Vergaserbauteil 56 mit einem offenen Ende 561 und einem geschlossenen Ende 562 ragt mit dem offenen Ende 561 in den Vergaserbehälter 50 hinein. Das geschlossene Ende 562 des Vergaserbauteils 56 ragt durch den oberen Deckel 52 aus dem Vergaserbehälter 50 heraus. Das offene Ende 561 des Vergaserbauteils 56 kommt in etwa in der Mitte des Vergaserbehälters 50 zu liegen. Im Abstand h unter dem offenen Ende 561 des Vergaserbauteils 56 ist ein drehbarer Rost 57 angeordnet, der durch einen motorischen Antrieb 57a, der den unteren Deckel 54 durchsetzt, periodisch bewegt werden kann. In das aus dem Vergaserbehälter 50 herausragende geschlossene Ende 562 des Vergaserbauteils 56 münden eine Zuführung 58 für kohlenstoffhaltige Einsatzstoffe in Form von schüttbaren Teilchen, eine Luftzuführung 60 zur Zuführung von Verbrennungsluft L in den Vergaserbehälter 50 und ein Füllstandssensor 52, mit dem sich der Füllstand der Teilchen im rohrförmigen Vergaserbauteil 56 ermitteln und überwachen lässt. Im Bereich des offenen Endes 561 des Vergaserbauteils 56 ist ein Revisionsschacht 64 vorgesehen, der die Außenwand des Vergaserbehälters 50 durchdringt. Der Revisionsschacht 64 wird durch einen Abdeckflansch 70 verschlossen, der Teil einer Temperaturmesseinrichtung 72 ist. Durch die Temperaturmesseinrichtung 72 kann die Temperatur im Vergaserbehälter 50 überwacht werden. Über dem Revisionsschacht 64 können bei Stillstand des Reaktors, Wartungsarbeiten, Reinigungsarbeiten im Reaktorbehälterinneren vorgenommen werden.

Im Bereich unter dem Rost 57 wird über einen Produktgasabzug 66 Produktgas 1 aus dem Vergaserbehälter 50 abgezogen, in einem Wärmetauschersystem 40 gemäß Fig. 4 gekühlt und in einem nachgeschalteten Zyklonabscheider 74 gereinigt. Die durch den Rost 57 fallende Asche wird durch den Produktgasstrom über den Produktgasabzug 66 aus dem Vergaserbehälter 50 ausgetragen.

Sowohl der rohrförmige Vergaserbehälter 50 als auch das rohrförmige Vergaserbauteil 56 weisen einen kreisringförmigen Querschnitt auf und sind konzentrisch zueinander angeordnet. Das rohrförmige Vergaserbauteil 56 weist einen Innendurchmesser d auf, der kleiner ist als der Innendurchmesser D des rohrförmigen Vergaserbehälters 50.

Bezugszeichenliste:

$v$ Strömungsgeschwindigkeit des Gasstroms im Strömungskanal 16
$v_1$ Strömungsgeschwindigkeit des Gasstroms 1 im Gaseinlass 12
$v_2$ Strömungsgeschwindigkeit des Gasstroms 1 im Gasauslass 14
$F_1$ Querschnittsfläche des Gaseinlasses 12
$F_2$ Querschnittsfläche des Gasauslasses 14
$F_{rs(i)}$ Querschnittsflächen der Strömungskanäle 16
L Verbrennungsluft
h Abstand Rost 57 und offenes Ende 561 des Vergaserbauteils 56
d Innendurchmesser des Vergaserbehälters
D Außendurchmesser des Vergaserbauteils

1 Gasstrom mit Feststoffpartikeln 3
2 Wärmetauscherbauteil
3 Feststoffpartikel
4 kreiszylindrischer Hauptkörper
6 Mantel von 4
6a Außenseite von 6
6b Innenseite von 6
8a linke Stirnseite von 4
8b rechte Stirnseite von 4
10a linker Flansch
10b rechter Flansch
12 Gaseinlass
14 Gasauslass
16 kreisringspaltförmiger Strömungskanal
18 stangenförmiges Bauteil
20 Prandtlsche Grenzschicht
22 schwere Partikel
24 leichte Partikel

30 Wärmetauscherbauteil
32 zylindrischer Behälter
32a Innenseite des Behälters 32
34 kreisringspaltförmiger Strömungskanal
36 flüssiges Wärmetauschermedium

40 Wärmetauschersystem
30-i Wärmetauscherbauteile
12-i Gaseinlässe
14-i Gasauslässe
16-i kreisringspaltförmiger Strömungskanäle
42 schraubengangförmiges Leitblech
44 Außenkante von 42
45 Innenkante von 42

100 Vorrichtung zur Erzeugung eines brennbaren Produktgases aus kohlenstoffhaltigen Einsatzstoffen
50 Vergaserbehälter
52 oberer Deckel
54 unterer Deckel
56 Vergaserbauteil
561 offenes Ende von 56
562 geschlossenes Ende von 56
57 Rost
57a motorischer Antrieb von 57
58 Zuführung für kohlenstoffhaltige Einsatzstoffe
60 Luftzuführung

62 Füllstandssensor
64 Revisionsschacht
66 Produktgasabzug
68 Wärmetauscher
70 Abdeckflansch
72 Temperaturmesseinrichtung
74 Zyklonabscheider

**Patentansprüche**

1. Wärmetauscherbauteil (2, 30) mit
einem zylindrischem Hauptkörper (4), der einen Mantel (6) aus einem Wärme leitendem Material umfasst,
einem Gaseinlass (12) an einem Ende (8a) und einem Gasauslass (14) am anderen Ende (8b) des zylindrischen Hauptkörpers (4), wobei Gaseinlass (12) und Gasauslass (14) tangential und quer zur Längsrichtung des zylindrischen Hauptkörpers (4) in den zylindrischen Hauptkörper (4) münden, wodurch zwischen dem Gaseinlass (12) und dem Gasauslass (14) in dem zylindrischen Hauptkörper (4) ein Strömungskanal (16) für einen schraubengangförmig verlaufenden Gasstrom (1) mit Feststoffpartikeln (3) ausgebildet ist,
**dadurch gekennzeichnet,**
**dass** der Gaseinlass (12) über seine Länge eine konstante erste Querschnittsfläche ($F_1$) und dass der Gasauslass (14) über seine Länge eine konstante zweite Querschnittsfläche ($F_2$) aufweisen, und **dass** die erste Querschnittsfläche ($F_1$) größer als die zweite Querschnittsfläche (F2) ist.

2. Wärmetauscherbauteil nach Anspruch 1, **dadurch gekennzeichnet, dass** Gaseinlass (12) und Gasauslass (14) senkrecht zur Längsrichtung des zylindrischen Hauptkörpers (4) tangential in den zylindrischen Hauptkörper (4) münden.

3. Wärmetauscherbauteil nach einem der vorhergehenden Ansprüche, **dadurch gekennzeichnet, dass** in dem zylindrischen Hauptkörper (4) wenigstens ein schraubengangförmiges Leitblech (42) angeordnet ist, das die schraubenförmige Strömung in dem Strömungskanal (16) unterstützt.

4. Wärmetauscherbauteil nach Anspruch 3, **dadurch gekennzeichnet, dass** das schraubengangförmige Leitblech (42) in Längsrichtung des zylindrischen Hauptkörpers (4) betrachtet den Querschnitt des Hauptkörpers (4) vollständig ausfüllt.

5. Wärmetauscherbauteil nach einem der vorhergehenden Ansprüche 1 bis 3, **dadurch gekennzeichnet, dass** in dem zylindrischen Hauptkörper (4) ein stangenförmiges Bauteil (18) zur Ausbildung eines ringspaltförmigen Strömungskanals (16) angeordnet ist.

6. Wärmetauscherbauteil nach Anspruch 5, **dadurch gekennzeichnet, dass** das schraubengangförmige Leitblech (42) das stangenförmige Bauteil (18) dicht umschließt und dicht mit dem Mantel (6) abschließt.

7. Wärmetauscherbauteil nach einem der vorhergehenden Ansprüche, **dadurch gekennzeichnet, dass** der zylindrische Hauptkörper (4) einen kreisförmigen Querschnitt aufweist, und dass das stangenförmige Bauteil (18) einen kreisförmigen Querschnitt aufweist und mittig in dem zylindrischen Hauptkörper (4) angeordnet ist.

8. Wärmetauscherbauteil nach einem der vorhergehenden Ansprüche, **dadurch gekennzeichnet, dass** der zylindrische Hauptkörper (4) derart von einem zylindrischen Behälter (32) umgeben ist, so dass sich ein ringspaltförmiger Strömungskanal (34) für ein Wärmetransportmedium (36) ergibt.

9. Wärmetauscherbauteil nach einem der vorhergehenden Ansprüche, **dadurch gekennzeichnet, dass** die Querschnittsfläche ($F_{rs}$) des ringspaltförmigen Strömungskanals (16) im zylindrischen Hauptkörper (4) zwischen Gaseinlass (12) und Gasauslass (14) konstant ist.

10. Wärmetauschersystem (40) zur Kühlung eines Gasstroms (1) mit Feststoffpartikeln (3), mit einer Mehrzahl von n Wärmetauscherbauteilen (2-i, 30-1) nach einem der vorhergehenden Ansprüche, die seriell miteinander verbunden sind, so dass der Gasauslass (14-i) des i-ten Wärmetauscherbauteils (2-i, 30-i) der Gaseinlass (14-(i+1)) des (i+1)-ten Wärmetauscherbauteils (2-(i+1), 30-(i+1))ist, mit i = 1 bis n-1.

11. Wärmetauschersystem nach Anspruch 10, **dadurch gekennzeichnet, dass** für die Querschnittsflächen ($F_{rs(i)}$) der ringspaltförmigen Strömungskanäle (16-i) der einzelnen Wärmetauscherbauteile (2-i, 30-i) gilt

$$F_{rs(i)} > F_{rs(i+1)}$$

mit i = 1 bis n-1.

12. Vorrichtung (100) zum Erzeugen eines Produktgases (1) aus kohlenstoffhaltigen Einsatzstoffen, insbesondere aus schüttbaren Biomasseteilchen, mit einem Vergaserbehälter (50),
einer Zuführung (58) für die kohlenstoffhaltigen Einsatzstoffe im oberen Bereich des Vergaserbehälters (50),
einem im unteren Bereich des Vergaserbehälters (50) angeordneten, drehbaren Rost (57) zur Abstützung der kohlenstoffhaltigen Einsatzstoffe,
einer Luftzuführung (60) zur Zuführung von Verbrennungsluft in den Vergaserbehälter (50),
einem aus dem Vergaserbehälter (50) aus dem Bereich unter dem Rost (57) herausführenden Produktgasabzug (66) zum Abführen des Produktgases (1) aus dem Vergaserbehälter (50), und
einem dem Produktgasabzug (66) nachgeschaltetem Wärmetauscher (40), **dadurch gekennzeichnet, dass** der Wärmetauscher ein Wärmetauschersystem (40) nach einem der vorhergehenden Ansprüche 10 oder 11 ist.

**Claims**

1. Heat exchanger component (2, 30) having
   a cylindrical main body (4), which comprises a casing (6) made of a heat conducting material,
   a gas inlet (12) at one end (8a) and a gas outlet (14) at the other end (8b) of the cylindrical main body (4), wherein the gas inlet (12) and gas outlet (14) lead into the cylindrical main body (4) tangentially and transversely to the longitudinal direction of the cylindrical main body (4), with the result that a flow duct (16) for a helically running gas flow (1) containing solid particles (3) is formed in the cylindrical main body (4) between the gas inlet (12) and the gas outlet (14),
   **characterized**
   **in that** the gas inlet (12) has a constant first cross-sectional area ($F_1$) along its length and the gas outlet (14) has a constant second cross-sectional area ($F_2$) along its length, and
   **in that** the first cross-sectional area ($F_1$) is greater than the second cross-sectional area ($F_2$).

2. Heat exchanger component according to Claim 1, **characterized in that** the gas inlet (12) and gas outlet (14) lead tangentially into the cylindrical main body (4) perpendicularly to the longitudinal direction of the cylindrical main body (4).

3. Heat exchanger component according to either of the preceding claims, **characterized in that** at least one helical baffle (42) is arranged in the cylindrical main body (4), said baffle (42) supporting the helical flow in the flow duct (16).

4. Heat exchanger component according to Claim 3, **characterized in that** the helical baffle (42) completely fills the cross section of the main body (4) as seen in the longitudinal direction of the cylindrical main body (4).

5. Heat exchanger component according to one of the preceding Claims 1 to 3, **characterized in that** a rod-like component (18) for forming a flow duct (16) in the form of an annular gap is arranged in the cylindrical main body (4).

6. Heat exchanger component according to Claim 5, **characterized in that** the helical baffle (42) closely encloses the rod-like component (18) and ends closely at the casing (6).

7. Heat exchanger component according to one of the preceding claims, **characterized in that** the cylindrical main body (4) has a circular cross section, and **in that** the rod-like component (18) has a circular cross section and is arranged centrally in the cylindrical main body (4).

8. Heat exchanger component according to one of the preceding claims, **characterized in that** the cylindrical main body (4) is surrounded by a cylindrical container (32) such that a flow duct (34) in the form of an annular gap for a heat transfer medium (36) is produced.

9. Heat exchanger component according to one of the preceding claims, **characterized in that** the cross-sectional area ($F_{rs}$) of the flow duct (16) in the form of an annular gap in the cylindrical main body (4) is constant between the gas inlet (12) and gas outlet (14).

10. Heat exchanger system (40) for cooling a gas flow (1) containing solid particles (3), having a plurality of n heat exchanger components (2-i, 30-1) according to one of the preceding claims, which are connected serially together such that the gas outlet (14-i) of the i-th heat exchanger component (2-i, 30-i) is the gas inlet (14-(i+1)) of the (i+1)-th heat exchanger component (2-(i+1), 30-(i+1)), where i = 1 to n-1.

11. Heat exchanger system according to Claim 10, **characterized in that**, for the cross-sectional areas ($F_{rs(i)}$) of the flow ducts (16-i) in the form of an annular gap of the individual heat exchanger components (2-i, 30-i), the following applies:

$$F_{rs(i)} > F_{rs(i+1)}$$

wherein i = 1 to n-1.

12. Device (100) for creating a product gas (1) from carbon-containing charge materials, in particular from pourable biomass particles, having
    a gasifier container (50),
    a feed (58) for the carbon-containing charge materials in the upper region of the gasifier container (50),
    a rotatable grating (57), arranged in the lower region of the gasifier container (50), for supporting the carbon-containing charge materials, an air feed (60) for feeding combustion air into the gasifier container (50),

a product-gas exhaust (66), leading out of the gasifier container (50) from the region under the grating (57), for discharging the product gas (1) from the gasifier container (50), and

a heat exchanger (40) connected downstream of the product-gas exhaust (66),

**characterized in that** the heat exchanger is a heat exchanger system (40) according to either of the preceding Claims 10 and 11.

## Revendications

1. Composant échangeur de chaleur (2, 30) comprenant

un corps principal cylindrique (4) qui comprend une enveloppe (6) en matériau thermoconducteur,

une entrée de gaz (12) à une extrémité (8a) et une sortie de gaz (14) à l'autre extrémité (8b) du corps principal cylindrique (4), l'entrée de gaz (12) et la sortie de gaz (14) débouchant tangentiellement et transversalement à la direction longitudinale du corps principal cylindrique (4) dans le corps principal cylindrique (4), de sorte qu'entre l'entrée de gaz (12) et la sortie de gaz (14) dans le corps principal cylindrique (4) soit réalisé un canal d'écoulement (16) pour un flux de gaz (1) contenant des particules solides (3), s'étendant sous forme hélicoïdale,

**caractérisé en ce que**

l'entrée de gaz (12) présente sur sa longueur une première surface en section transversale constante ($F_1$) et **en ce que** la sortie de gaz (14) présente sur sa longueur une deuxième surface en section transversale constante ($F_2$), et **en ce que** la première surface en section transversale ($F_1$) est plus grande que la deuxième surface en section transversale ($F_2$).

2. Composant échangeur de chaleur selon la revendication 1, **caractérisé en ce que** l'entrée de gaz (12) et la sortie de gaz (14) débouchent tangentiellement dans le corps principal cylindrique (4) perpendiculairement à la direction longitudinale du corps principal cylindrique (4).

3. Composant échangeur de chaleur selon l'une quelconque des revendications précédentes, **caractérisé en ce que** dans le corps principal cylindrique (4) est disposée au moins une tôle conductrice (42) de forme hélicoïdale qui favorise l'écoulement hélicoïdal dans le canal d'écoulement (16).

4. Composant échangeur de chaleur selon la revendication 3, **caractérisé en ce que** la tôle conductrice de forme hélicoïdale (42), vue dans la direction longitudinale du corps principal cylindrique (4), occupe toute la section transversale du corps principal (4).

5. Composant échangeur de chaleur selon l'une quelconque des revendications précédentes 1 à 3, **caractérisé en ce que** dans le corps principal cylindrique (4) est disposé un composant en forme de barre (18) pour réaliser un canal d'écoulement (16) en forme de fente annulaire.

6. Composant échangeur de chaleur selon la revendication 5, **caractérisé en ce que** la tôle conductrice de forme hélicoïdale (42) entoure hermétiquement le composant en forme de barre (18) et se termine hermétiquement avec l'enveloppe (6).

7. Composant échangeur de chaleur selon l'une quelconque des revendications précédentes, **caractérisé en ce que** le corps principal cylindrique (4) présente une section transversale de forme circulaire et **en ce que** le composant en forme de barre (18) présente une section transversale de forme circulaire et est disposé centralement dans le corps principal cylindrique (4) .

8. Composant échangeur de chaleur selon l'une quelconque des revendications précédentes, **caractérisé en ce que** le corps principal cylindrique (4) est entouré par un récipient cylindrique (32) de telle sorte que l'on obtienne un canal d'écoulement (34) en forme de fente annulaire pour un milieu caloporteur (36).

9. Composant échangeur de chaleur selon l'une quelconque des revendications précédentes, **caractérisé en ce que** la surface en section transversale ($F_{rs}$) du canal d'écoulement en forme de fente annulaire (16) dans le corps principal cylindrique (4) est constante entre l'entrée de gaz (12) et la sortie de gaz (14).

10. Système échangeur de chaleur (40) pour refroidir un flux de gaz (1) contenant des particules solides (3), comprenant une pluralité de composants échangeurs de chaleur (2-i, 30-1) selon l'une quelconque des revendications précédentes, qui sont connectés les uns aux autres en série de telle sorte que la sortie de gaz (14-i) du ième composant échangeur de chaleur (2-i, 30-i) soit l'entrée de gaz (14-(i+1)) du (i+1)ème composant échangeur de chaleur (2-(i+1), 30-(i+1)), avec i = 1 à n-1.

11. Système échangeur de chaleur selon la revendication 10, **caractérisé en ce que** pour les surfaces en section transversale ($F_{rs(i)}$) des canaux d'écoulement en forme de fente annulaire (16-i) des composants échangeurs de chaleur individuels (2-i, 30-i), on a :

$$F_{rs(i)} > F_{rs(i+1)}$$

avec i = 1 à n-1.

**12.** Dispositif (100) pour générer un gaz de production (1) constitué de matières de charge contenant du carbone, en particulier des particules de biomasse en vrac, comprenant un récipient de carburateur (50),

une alimentation (58) pour les matières de charge contenant du carbone dans la région supérieure du récipient de carburateur (50),

une grille (57) rotative, disposée dans la région inférieure du récipient de carburateur (50) pour supporter les matières de charge contenant du carbone,

une alimentation en air (60) pour acheminer de l'air comburant dans le récipient de carburateur (50),

une sortie de gaz de production (66) sortant du récipient de carburateur (50) hors de la région sous la grille (57) pour évacuer le gaz de production (1) hors du récipient de carburateur (50), et

un échangeur de chaleur (40) monté en aval de la sortie de gaz de production (66),

**caractérisé en ce que** l'échangeur de chaleur est un système échangeur de chaleur (40) selon l'une quelconque des revendications précédentes 10 ou 11.

## Fig. 1

## Fig. 2

## Fig. 3

Fig. 4

Fig. 5

Fig. 6a    Fig. 6b    Fig. 6c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP H1162723 A
- EP 1884634 A2
- JP 2000111277 A
- AT 371591 B
- US 20080190593 A1
- US 6827138 B1